(19)

Europäisches
Patentamt
European
Patent Office
Office européen
des brevets

(11)  **EP 2 075 170 B1**

(12) **EUROPEAN PATENT SPECIFICATION**

(45) Date of publication and mention
of the grant of the patent:
**16.02.2011  Bulletin 2011/07**

(51) Int Cl.:
***B60W 30/12*** *(2006.01)*   ***B60W 50/08*** *(2006.01)*

(21) Application number: **07425834.4**

(22) Date of filing: **28.12.2007**

(54) **A driving assistance system for a vehicle travelling along a roadway that lacks lane demarcation lines**

Fahrassistenzsystem für ein Fahrzeug das auf einem Weg ohne Fahrspurabgrenzungslinien fährt

Système d'assistance de conduite pour un véhicule suivant une route manquant des lignes de démarcation

(84) Designated Contracting States:
**DE FR IT**

(43) Date of publication of application:
**01.07.2009  Bulletin 2009/27**

(73) Proprietor: **Magneti Marelli S.p.A.**
**20011 Corbetta (MI) (IT)**

(72) Inventors:
• **Ghisio, Guido**
**10078 Venaria (Torino) (IT)**

• **Marenco, Daniele**
**10078 Venaria (Torino) (IT)**

(74) Representative: **Deambrogi, Edgardo et al**
**Jacobacci & Partners S.p.A.**
**Corso Emilia 8**
**10152 Torino (IT)**

(56) References cited:
**EP-A- 1 676 763**     **EP-A- 1 760 662**
**DE-A1-102004 007 072**   **GB-A- 2 276 481**
**US-A1- 2006 131 093**

**Description**

The present invention relates to vehicle driving assistance systems, and in particular driving assistance systems relating to "lateral" movements performed by a vehicle, particularly to aid the maintaining of the vehicle within a traffic lane of a roadway or the changing of a traffic lane when overtaking.

In recent years, the progress achieved in the field of passive safety and the equipping of vehicles with active systems for safety has contributed to a notable improvement in road safety.

To further reduce the occurrence of danger scenarios and achieve a higher level of driving comfort, driving assistance systems are being developed that are capable of assisting the driver in manoeuvres and in every critical driving situation that may arise on the roads, preventing possible risk scenarios.

The preventive safety functions which such systems control include that of lateral control of the vehicle, which provides for controlling the vehicle in respect of the possibility of leaving the traffic lane defined by demarcation lines marked out on the roadway and possibly actively maintaining it within the current traffic lane or, if the driver wishes to "exit" the abovementioned lane, aiding the associated operation by checking for the presence of any vehicles which show up in the lane to be occupied.

Such systems are also arranged to inform the driver about the need to adapt his travel path using various information channels, such as visual indications, acoustic signalling, tactile or "haptic" signalling.

As regards a system aimed at maintaining a vehicle within a traffic lane (known as a Lane Departure Warning system), signalling is provided for the crossing over, which may be imminent or has taken place, of the traffic lane demarcation lines if such a crossing is unintentional, i.e. if the appropriate direction indicator was not operated beforehand to signal the lane change, through acoustic means or by providing the driver a tactile sensation (haptic feedback) in the form of a vibration at the steering wheel or in the form of torque at the steering wheel which produces a sensation of resistance to the crossing-over of the lane demarcation lines and "suggests" the appropriate steering action to take in order to return or keep the vehicle inside the same lane.

Known driving assistance systems are adapted to flag to the driver a warning state in the event that an anomalous, i.e. potentially dangerous, driving condition is recognized and if necessary to trigger an autonomous intervention of the vehicle driving systems involved, in the event of a critical scenario, to control the vehicle and restore correct driving conditions. Indeed, if intervention by the driver is unsatisfactory, i.e. it is not sufficient to avoid the danger signalled, the assistance systems can provide for the automatic actuation of the vehicle driving systems (for example, the braking or steering system), as a temporary substitution for human intervention.

Such systems are based on the view of the scene in front of the vehicle in the direction of travel, for example by means of shooting devices such as video cameras and similar devices, and on the optical recognition of the demarcation lines of the lanes or at least of the traffic lane in which vehicle is travelling. A system for recognizing a traffic lane marking line is, for example, disclosed in EP 1 760 662 A1, which is considered as being the closest prior art document.

However, in practice there are situations in which the driver of a vehicle finds himself driving along a road which lacks demarcation lines, in which cases such systems are ineffective. For example, consider the frequent cases in which the road-markings are deteriorated, cases in which such markings are not present over a long section due to repair work on the road surface, and national scenarios of countries that are geographically very extensive and therefore have road networks containing roads with heavy traffic moving at high speed, the roads being built over hundreds of kilometres, with scarce financial resources to be channelled to infrastructures.

The condition of absence of traffic lane demarcation leads to the onset of safety problems, particularly in the case of roads for which the roadway is very wide, for example motorways, where drivers do not find points of reference to maintain the vehicle at a correct distance from the roadside (which itself is often barely perceptible in conditions of reduced visibility due to severe weather conditions or due to nighttime driving) and/or from the middle of the roadway, i.e. within a virtual traffic lane.

If very wide roadways are considered, which could accommodate several lanes per direction of travel, the unavailability of lane demarcation can bring about an improper engagement of the roadway by a vehicle, which therefore forms an obstacle to other vehicles travelling in the same direction, for example in the event of overtaking manoeuvres.

An object of the present invention is to overcome the ineffectiveness of known driving assistance systems for maintaining a vehicle within a traffic lane in the case of a roadway lacking lane demarcation lines.

According to the present invention such an aim is achieved by virtue of a driving assistance system having the features claimed in Claim 1.

particular embodiments form the subjects of the dependent claims.

In summary, the present invention is based on the principle of providing a driving assistance system adapted to determine virtual traffic lanes by shooting a scene in front of the vehicle, recognizing in the captured image an area representing the roadway on which the vehicle is travelling and estimating the width of the roadway using trigonometric considerations.

Based on the results obtained, the number and positions of traffic lanes are determined according to further predetermined configuration constraints indicating the minimum possible width of the lanes or the number of lanes or other virtual representation criteria of the roadway aimed at optimizing the position of the vehicle on the roadway to minimize risks of accidents.

Other advantages and features of the present invention will become clear from the following detailed description which is given with reference to the appended drawings which are provided purely by way of non-limiting example and in which:

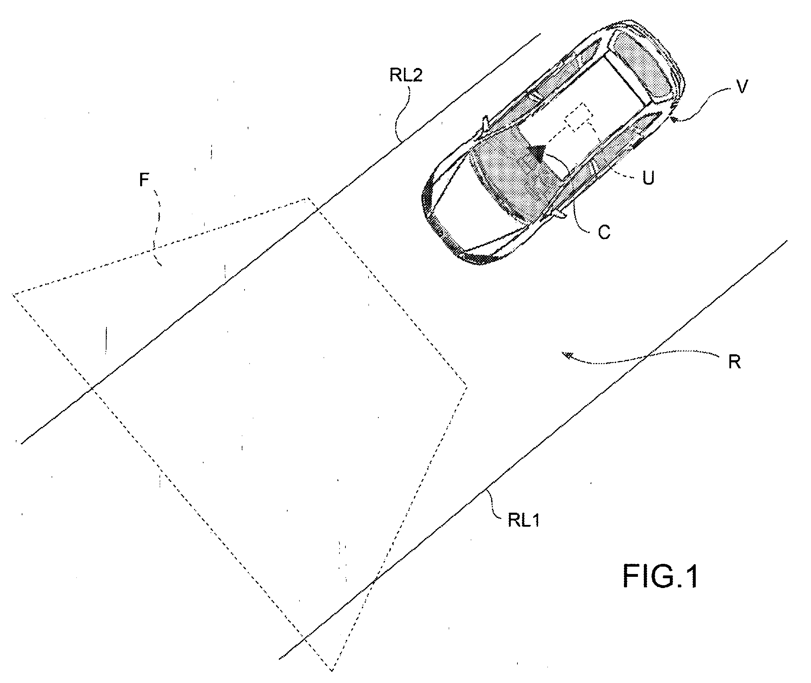

> Figure 1 is a schematic representation of a driving scenario which involves a driving assistance system according to the invention;
> Figures 2a to 2c are schematic diagrams of the geometry of the system according to the invention;
> Figures 3a and 3b are representations of the image taken by the shooting means of the system according to the invention;
> Figures 4a and 4b are exemplary diagrams of the calculation of the number and positions of lanes in a roadway according to the system of the invention;
> Figures 5a to 5c are diagrams representing the position of a vehicle on a roadway in application examples of the system according to the invention.

A vehicle driving assistance system according to the invention comprises an optical sensor or detection assembly for the environment surrounding the vehicle V, in particular for an area in front of the vehicle, for example, including a single shooting device C such as a video camera or similar device, or a pair of shooting devices, operating at visible wavelengths and preferably arranged on a surface at the front of the vehicle, for example near the windscreen or, in a more forward position, on the bonnet or on the front bumper, or even on the roof.

The shooting device C is coupled to a processing and control unit U, preferably in the form of a digital signal processor, to which it supplies image signals representing the environment outside the vehicle in its direction of travel, i.e. representing a so-called front scene. In particular, the shooting device is adapted to supply an image I representing a footprint or field of view F on the scene in front of the vehicle, comprising the roadway R and possible neighbouring areas. Clearly, the geometric characteristics of the footprint F are dependent on the parameters and shooting settings of the device, as will be better illustrated below in the description.

The processing unit performs a first pre-processing phase, comprising lens distortion recovery, and contrast and brightness control.

It is connected to an object recognition module arranged to recognize, in the image I, the roadway R with respect to the verge areas according to known image recognition techniques, for example based on identifying lines RL1, RL2 delimiting the roadway area R, i.e. the boundaries between the roadway area R and terrain outside it based on the respective chromatic and texture characteristics of the image. Indeed, the roadway area exhibits a characteristic predominant colour, distinguishable from the predominant colour of the neighbouring verge area and of the peripheral areas of the image captured by the shooting means. Specifically, the wearing course exhibits an overall grey colour which, regardless of bright or dark shades, has equal values of quantities of the basic colours in the RGB space, in a manner that is different from every other terrain. Furthermore, combining this information with that of an image irregularity analyzer adapted to pick up a variation in the directional gradient, greater reliability is ensured on the correctness of the classification. Specifically, the asphalt of the wearing course exhibits a substantially regular structure, while the verge and the neighbouring areas exhibit rather irregular structures.

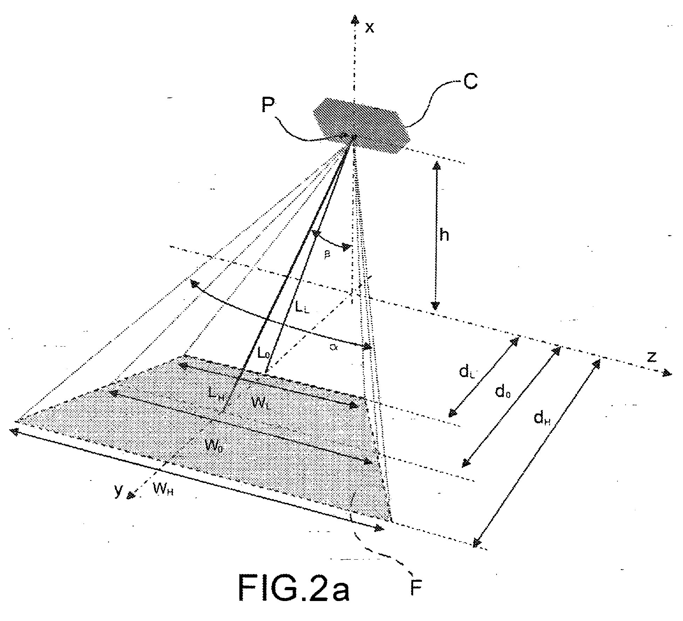

To understand the invention, it is appropriate to further examine the geometry of the system with reference to Figures 2a to 2c which represent the parameters of the system model in three different views.

To simplify the analysis, the shooting device C will hereafter be considered to be a point object, indicated by the point P towards which the beams of the shots of the environment images converge.

A reference system is defined, in which x identifies the axis that is vertical with respect to the plane of travel of the vehicle and that passes through the point P, y is the direction of travel of the vehicle and z is the lateral direction with respect to the vehicle, transverse to the direction of travel, so that yz identifies the plane of travel (on which the roadway lies), xz identifies the vertical plane that is transverse to the direction of travel and containing the shooting device, and xy identifies the middle longitudinal vertical plane of the shooting device extended along the direction of travel (preferably, but not necessarily, coincident with the middle longitudinal plane of the vehicle).

The point P representing the shooting device C therefore lies on the x axis, and its projection falls on the origin of the reference system.

The settings and parameters of the shooting device to be taken into account for calculating the footprint or field of view F on the roadway are:

> $h$: height (along the x axis) of the shooting device from the plane of travel (yz plane);
> β: angle of orientation of the shooting device in the xy plane with respect to the xz plane normal to the plane of travel;

α: horizontal (angle of) field of view of the shooting device (yz plane);
γ: vertical (angle of) field of view of the shooting device (xy plane);
$Npixel_H$ : horizontal resolution;
$Pixel_V$: vertical resolution;

The geometric parameters representing the footprint of the shooting device are:

$L_L$: lower visual distance of the shooting device on the plane of travel (y axis);
$L_0$: middle visual distance of the shooting device on the plane of travel (y axis);
$L_H$: upper visual distance of the shooting device on the plane of travel (y axis);
$d_L$: distance between the lower point of view of the shooting device on the plane of travel (lower point of view of the field of view along the y axis) and the projection on the plane of travel of the position of the shooting device;
$d_0$: distance between the central point of view of the shooting device on the plane of travel (middle point of view of the field of view along the y axis) and the projection on the plane of travel of the position of the shooting device;
$d_H$: distance between the upper point of view of the shooting device on the plane of travel (upper point of view of the field of view along the y axis) and the projection on the plane of travel of the position of the shooting device;
$w_L$: width of the field of view F (along the z axis) at the lower line of view of the shooting device
$w_0$: width of the field of view F (along the z axis) at the middle line of view of the shooting device
$w_H$: width of the field of view F (along the z axis) at the upper line of view of the shooting device

The processing and control unit U is arranged to execute calculation operations to determine an optimal number of virtual traffic lanes and to monitor the position of the travelling vehicle with respect to those virtual lanes under the control of a computer program (software, firmware, etc.) stored locally.
The algorithm for the operation is described below.
With the settings and parameters of the shooting device known, the processing unit is arranged to calculate the geometric parameters representing the footprint F listed above according to the following relationships:

$$L_L = \frac{h}{\cos\left(\beta - \frac{\gamma}{2}\right)}$$

$$L_0 = \frac{h}{\cos(\beta)}$$

$$L_H = \frac{h}{\cos\left(\beta + \frac{\gamma}{2}\right)}$$

$$d_L = \tan\left(\beta - \frac{\gamma}{2}\right) \cdot h$$

$$d_0 = \tan(\beta) \cdot h$$

$$d_H = \tan\left(\beta + \frac{\gamma}{2}\right) \cdot h$$

$$w_L = 2 \cdot \tan\left(\frac{\alpha}{2}\right) \cdot L_L = 2 \cdot \tan\left(\frac{\alpha}{2}\right) \cdot \frac{h}{\cos\left(\beta - \frac{\gamma}{2}\right)}$$

$$w_0 = 2 \cdot \tan\left(\frac{\alpha}{2}\right) \cdot L_0 = 2 \cdot \tan\left(\frac{\alpha}{2}\right) \cdot \frac{h}{\cos(\beta)}$$

$$w_H = 2 \cdot \tan\left(\frac{\alpha}{2}\right) \cdot L_H = 2 \cdot \tan\left(\frac{\alpha}{2}\right) \cdot \frac{h}{\cos\left(\beta + \frac{\gamma}{2}\right)}$$

A particular case is when the central axis of view of the shooting device is parallel to the plane of travel yz, i.e. $\beta = 90°$. In that case the abovementioned relationships are simplified as:

$$L_L = \left.\frac{h}{\cos\left(\beta - \frac{\gamma}{2}\right)}\right|_{\beta=90°} = \frac{h}{\sin\left(\frac{\gamma}{2}\right)}$$

$$L_0 = \left.\frac{h}{\cos\left(\beta + \frac{\gamma}{2}\right)}\right|_{\beta=90°} = +\infty$$

$$L_H = \left.\frac{h}{\cos\left(\beta + \frac{\gamma}{2}\right)}\right|_{\beta=90°} = \frac{h}{\sin\left(-\frac{\gamma}{2}\right)}$$

$$d_L = \left.\tan\left(\beta - \frac{\gamma}{2}\right) \cdot h\right|_{\beta=90°} = \frac{h}{\tan\left(\frac{\gamma}{2}\right)}$$

$$d_0 = \left.\tan(\beta) \cdot h\right|_{\beta=90°} = +\infty$$

$$d_H = \tan\left(\beta + \frac{\gamma}{2}\right) \cdot h \Big|_{\beta=90°} = \frac{h}{\tan\left(-\frac{\gamma}{2}\right)}$$

$$w_L = 2 \cdot \tan\left(\frac{\alpha}{2}\right) \cdot \frac{h}{\cos\left(\beta - \frac{\gamma}{2}\right)} \Bigg|_{\beta=90°} = 2 \cdot \tan\left(\frac{\alpha}{2}\right) \cdot \frac{h}{\sin\left(\frac{\gamma}{2}\right)}$$

$$w_0 = 2 \cdot \tan\left(\frac{\alpha}{2}\right) \cdot \frac{h}{\cos(\beta)} \Bigg|_{\beta=90°} = +\infty$$

$$w_H = 2 \cdot \tan\left(\frac{\alpha}{2}\right) \cdot \frac{h}{\cos\left(\beta + \frac{\gamma}{2}\right)} \Bigg|_{\beta=90°} = 2 \cdot \tan\left(\frac{\alpha}{2}\right) \cdot \frac{h}{\sin\left(-\frac{\gamma}{2}\right)}$$

It is noted that if $\beta > 45°$, only the formulae for calculating the parameters $L_L$, $d_L$ and $w_L$ must be used since in the other cases the equations diverge towards $\infty$, since they are associated with trigonometric functions.

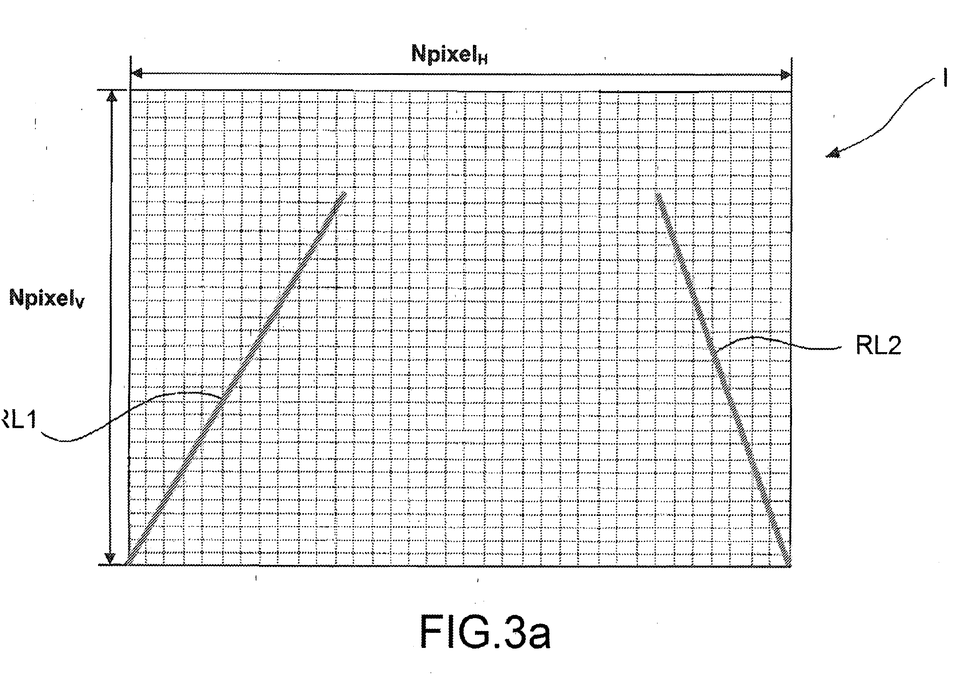

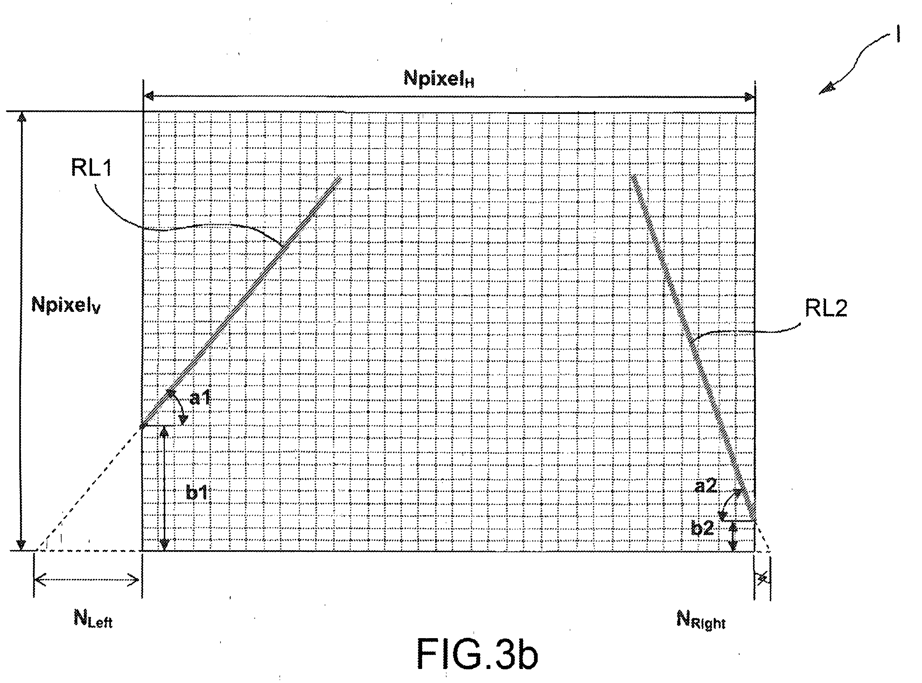

With reference to Figures 3a and 3b, which show an example pixel matrix of the shooting device, the possible images I picked up by the shooting device of the system according to the invention are represented. Naturally, the case in which the field of view F does not comprise the whole the wearing course must not arise, since there would lack the possibility of recognizing the real dimensions of the entire roadway.

In one improved embodiment of the invention, automatic control of the aperture of the field of view F of the shooting device C is provided, i.e. of the angles $\alpha$ and $\gamma$, as well as of the angle $\beta$ of orientation of the shooting device with respect to the plane of travel.

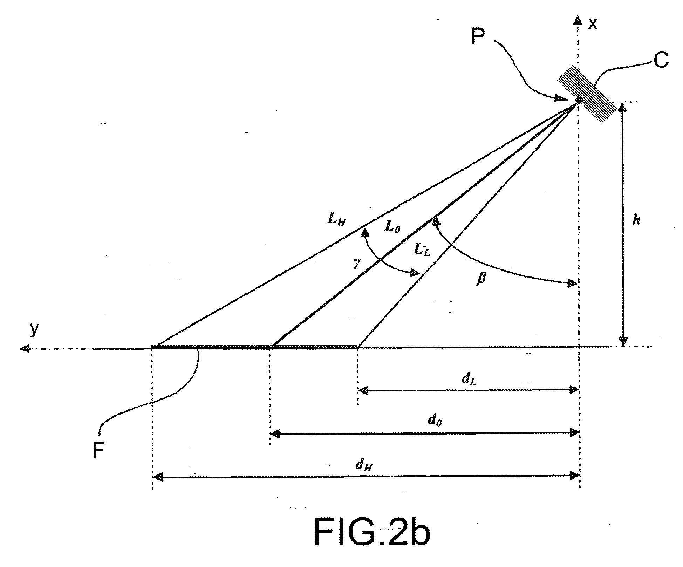

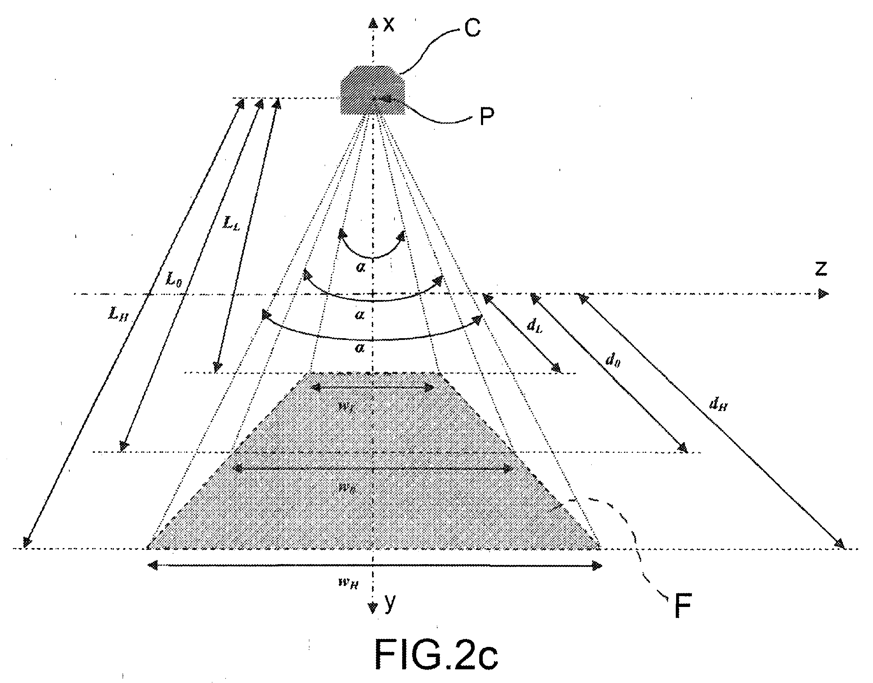

With reference to Figures 2a, 2b and 2c, preferable angular values are:

$\alpha \approx 40°$
$\gamma \approx 30°$
$80° < \beta < 90°$

It would be desirable for the shooting device to completely subtend the roadway at the lower line of view of the shooting device, as in Figure 3a, but in most cases this does not happen, and therefore the lines delimiting the roadway exhibit an offset with respect to the bottom row of the pixel matrix of the shooting device (i.e. the lower line of view of the shooting device is entirely contained in the roadway), as in Figure 3b. In this case, the processing unit is therefore arranged to extract the values of the left and right offsets b1 and *b2*, as well as the values of the angular coefficients *a1* and *a2* of inclination of the lines RL1 and RL2 delimiting the roadway on the image plane. Thus, it is possible to calculate the number of pixels (virtual) $N_{Left}$, $N_{Right}$ on the horizontal plane that are needed to frame the roadway, from the following expressions:

$$\begin{cases} y = a_1 x + b_1 \\ y = 0 \end{cases} \Rightarrow x = -\frac{b_1}{a_1} \Rightarrow N_{Left} = \left|-\frac{b_1}{a_1}\right|$$

$$\begin{cases} y = a_2 x + b_2 \\ y = 0 \end{cases} \Rightarrow x = -\frac{b_2}{a_2} \Rightarrow N_{Right} = \left| -\frac{b_2}{a_2} \right|$$

Thus the processing unit is capable of reconstructing the actual width of the roadway R, indicated below by $W_{Road}$, based on the value of $w_L$, using a relationship of proportionality:

$$w_L : Npixel_H = w_{Road} : \left( N_{Left} + Npixel_H + N_{Right} \right)$$

$$\Downarrow$$

$$w_{Road} = \frac{w_L \cdot \left( N_{Left} + Npixel_H + N_{Right} \right)}{Npixel_H}$$

From the width value of the roadway, it is possible to calculate the number of lanes estimated, $Num_{Lanes}$, as a function of a predetermined standard lane width value, which can be selected for example using information from digital maps and location signals which establish its context (for example, for the urban context about 2.5 m; for the extra-urban context about 3 m; for the motorway context about 4 m), rounding the value down, and the estimated lane width $Estimated\ Width_{Lane}$:

$$Num_{Lanes} = \left| \frac{w_{Road}}{StandardWidth_{Lane}} \right|$$

$$\Downarrow$$

$$EstimatedWidth_{Lane} = \frac{w_{Road}}{Num_{Lanes}}$$

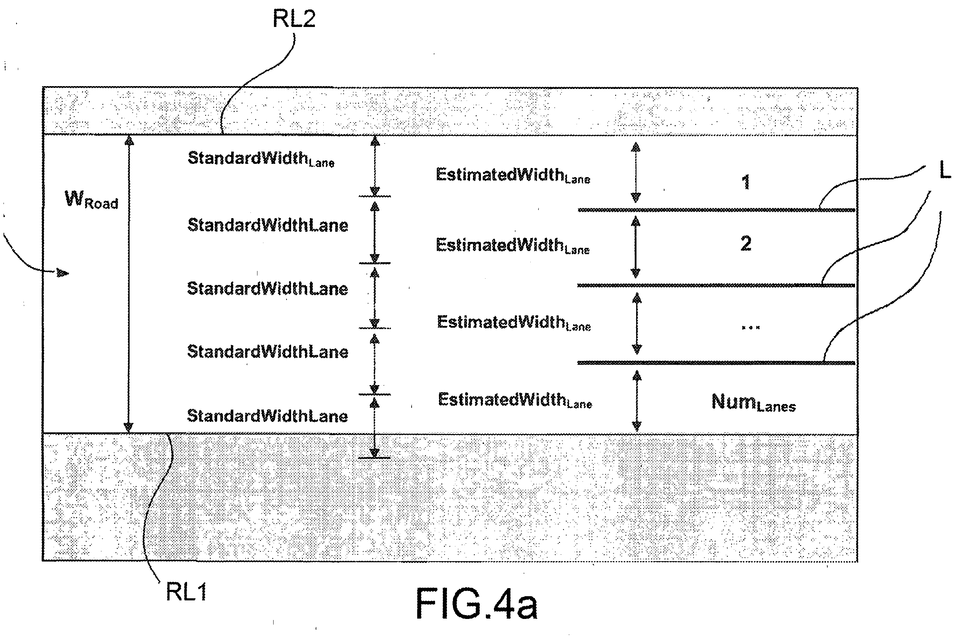

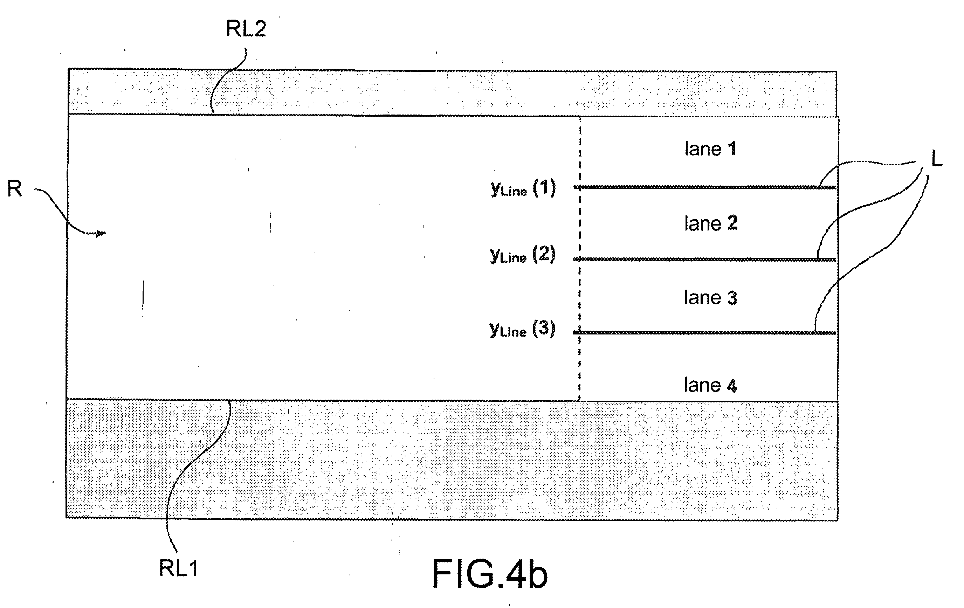

Preferably, in a protective condition, the system is arranged to deactivate itself if only one traffic lane is determined, i.e. the roadway is not wide enough to contain at least two standard-width traffic lanes, flagging all this to the driver. Furthermore, the processing unit is arranged to calculate the positions of virtual lane-demarcation lines L with reference to the edges RL1, RL2 of the roadway, in particular the edge associated with the driving side (righthand side in most countries and in the example of Figure 4b), by applying the following formula:

$$y_{Line}(i) = i \cdot EstimatedWidth_{Lane}$$

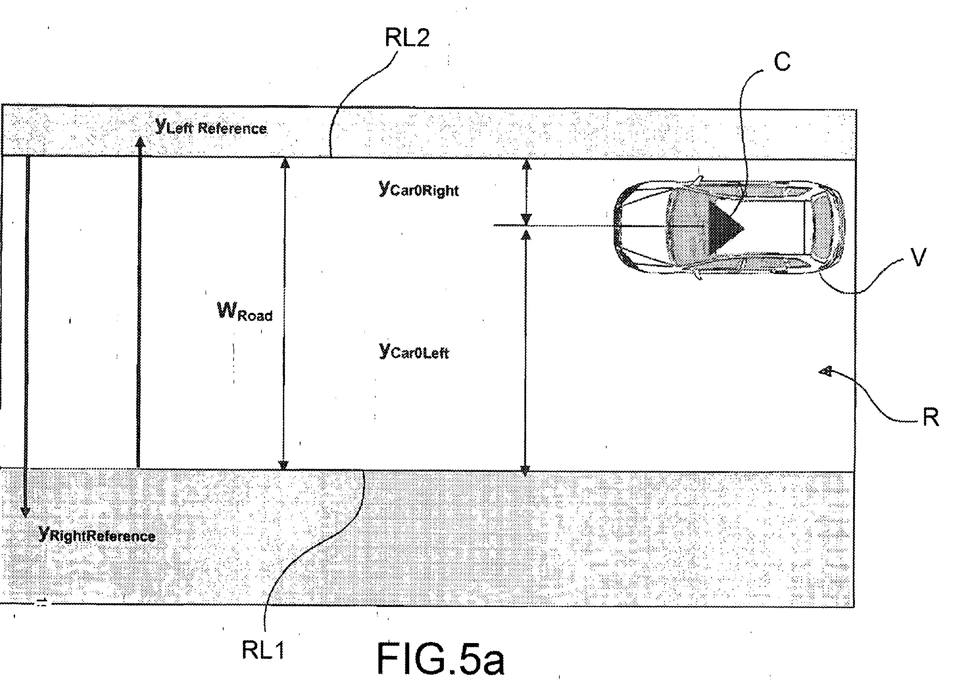

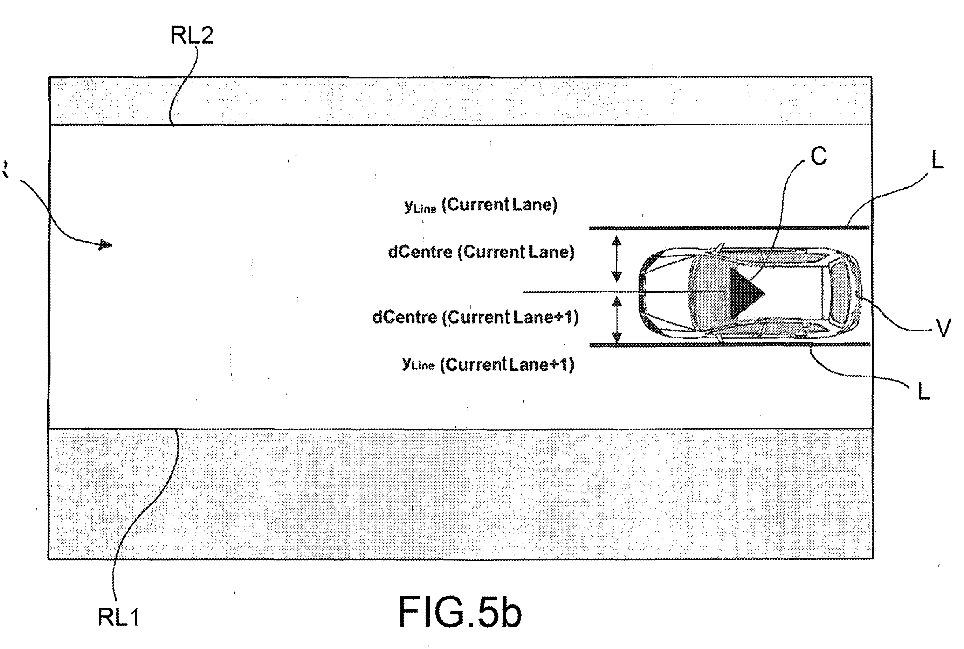

where i-is from 0 to $Nitm_{Lanes}$.
It is thus possible to determine the current position of the vehicle on the roadway R superimposed on the virtual lane-demarcation lines L as shown in Figure 5a.

To simplify the calculation, the case of a shooting device arranged in a middle longitudinal plane of the vehicle is given.

Cases in which the vehicle is located near the righthand or lefthand side of the roadway are considered separately, for example because that is the driving side in the country or in the case of overtaking.

For a vehicle on the righthand side, resulting in $N_{Right}$ being less than $N_{Left}$, this gives:

$$w_L : Npixel_H = y_{Car0\,Right} : \left( \frac{Npixel_H}{2} + N_{Right} \right)$$

$$\Downarrow$$

$$y_{Car0} = y_{Car0\,Right} = \frac{w_L \cdot \left( \dfrac{Npixel_H}{2} + N_{Right} \right)}{Npixel_H}$$

and for a vehicle on the lefthand side, resulting in $N_{Right}$ being greater than $N_{Left}$, this gives:

$$w_L : Npixel_H = y_{Car0\,Left} : \left( \frac{Npixel_H}{2} + N_{Left} \right)$$

$$\Downarrow$$

$$y_{Car0\,Left} = \frac{w_L \cdot \left( \dfrac{Npixel_H}{2} + N_{Left} \right)}{Npixel_H}$$

also requiring a change of reference system, since an absolute reference system is represented for the righthand driving side:

$$y_{Car0} = w_{Road} - y_{Car0\,Left}$$

Therefore, the position of the vehicle in the traffic lane is determined, revealing the traffic lane by analyzing all the virtual demarcation lines, according to an algorithm represented in the following pseudocode:

for $i$ from 0 to $((Num_{Lanes} - 1)$ or if the Lane is Found)

if $(y_{Line}(i) <= y_{Car0} <= y_{Line}(i{+}1))$

{

CurrentLane = $i$;

Lane is Found =1;

}

and the distance between the vehicle (centre of the vehicle as reference point) and the demarcation lines of the lane determined as in Figure 4b is calculated from the following formulae:

$$d_{Centre}(CurrentLane) = y_{Car0} - y_{Line}(CurrentLane)$$

$$d_{Centre}(CurrentLane + 1) = y_{Line}(CurrentLane + 1) - y_{Car0}$$

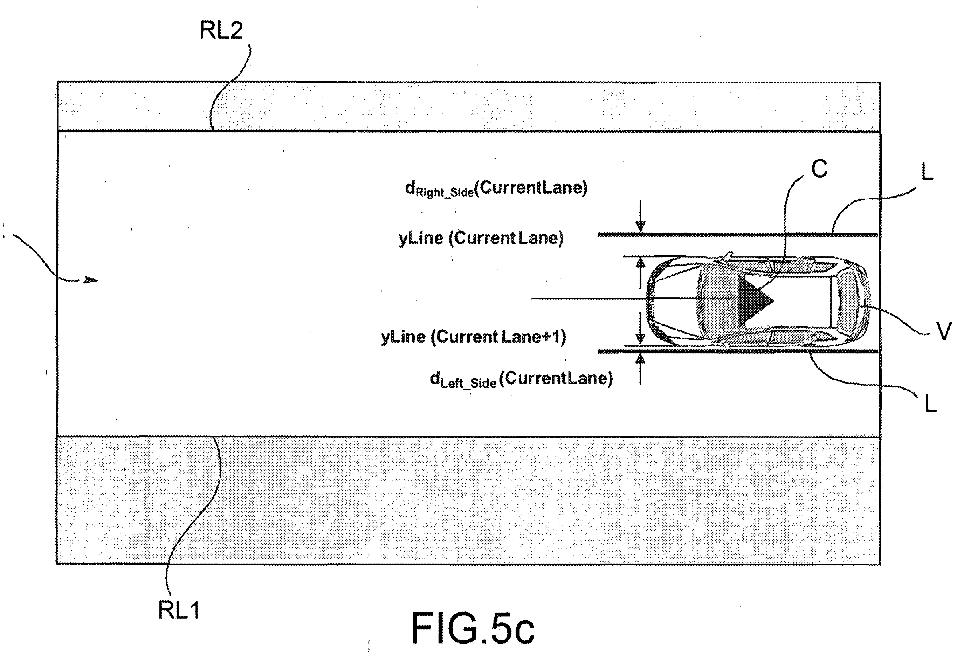

If the vehicle width $w_{Car}$ is taken into account, the formulae for calculating the distance between the side of the vehicle and the demarcation lines of the determined lane, as in Figure 5c, are:

$$d_{Right\_Side}(CurrentLane) = \left( y_{Car0} - \frac{w_{Car}}{2} \right) - y_{Line}(CurrentLane)$$

$$d_{Left\_Side}(CurrentLane) = y_{Line}(CurrentLane + 1) - \left( y_{Car0} + \frac{w_{Car}}{2} \right)$$

Lastly, with the vehicle lateral drift speed $v_y$ and the vehicle lateral acceleration $a_y$ being known, the time that the car would take to reach and pass over the virtual lane-demarcation line towards which it is approaching, i.e. to leave the identified virtual lane, can be calculated as a function of the distance between the vehicle and this line:

$$t = \frac{-v_y \pm \sqrt{v_y^2 - 2 \cdot a_y \cdot d(t)}}{a_y}$$

and therefore the time that must elapse before the vehicle crosses the righthand or lefthand demarcation line of the associated traffic lane is given by:

$$ttc_{Right\_Side} = \frac{-v_y \pm \sqrt{v_y^2 - 2 \cdot a_y \cdot d_{Right\_Side}(CurrentLane)}}{a_y}$$

$$ttc_{Left\_Side} = \frac{-v_y \pm \sqrt{v_y^2 - 2 \cdot a_y \cdot d_{Left\_Side}(CurrentLane)}}{a_y}$$

The processing and control unit is therefore arranged to execute one or more predetermined strategies for flagging the driver (acoustic, visual, haptic, etc. signalling) for example based on two conditions: one indicating the minimum safety distance from the lane demarcation line *Min_d_prot* and the other the minimum time to cross the lane demarcation line *Min_ttc.*

If the current distance between the vehicle and the lane demarcation line is less than *Min_d_prot* and/or the estimated time before the demarcation line is crossed is less than *Min_ttc,* the control unit is arranged to transmit danger signalling to the driver.

In an improved embodiment, the system is adapted to calculate an even number of estimated lanes $Num_{Lanes}$ so as to allocate with safety an equal number of lanes for each direction of travel in the case of two-way roadways.

According to a further improved embodiment, the system comprises a shooting device that can be oriented in space, at least in a horizontal plane, so as to track turning manoeuvres of the vehicle and therefore optimally shoot a locally bending roadway.

Naturally, the principle of the invention remaining the same, the forms of embodiment and details of construction may be varied widely with respect to those described and illustrated purely by way of non-limiting example, without thereby departing from the scope of protection of the present invention, which scope of protection is defined by the appended claims.

**Claims**

1. A driving assistance system for a vehicle (V) which travels along a roadway (R) that lacks traffic lane demarcation road-markings, in order to aid the maintaining of or the change of direction of travel, comprising:

   - means (C) for shooting a scene representing the environment outside the vehicle in its direction of travel, adapted to supply image signals representing a footprint or field of view (F) comprising the roadway (R) and neighbouring areas;
   - electronic image analysis means (U) connected to the shooting means (C) and arranged to recognize, in the image taken, an area representing the roadway (R) with respect to the neighbouring areas; and
   - electronic control means (U) adapted to determine current conditions of travel of the vehicle (V) and to execute, based on the determined conditions of travel, a preset driving assistance procedure, **characterised in that** the control means are arranged to:
   - estimate the width of the roadway (R);
   - determine a number of virtual traffic lanes lacking lane demarcation lines and their positions in the roadway (R) as a function of the estimated width of the roadway (R) and of predetermined road configuration constraints, including a minimum lane width;
   - determine the position of the vehicle (V) with respect to the virtual traffic lanes; and
   - flag the driver to indicate an anomalous driving condition or an erroneous driving manoeuvre based on this position of the vehicle.

2. A system according to Claim 1, in which the control means (U) are arranged to identify a pair of opposite-facing lines (RL1, RL2) delimiting the roadway (R) with respect to a neighbouring verge or outer terrain, based on respective chromatic and/or texture characteristics.

3. A system according to Claim 2, in which the control means (U) are arranged to calculate an actual width $w_{Road}$ of the roadway (R) using the proportionality relationship:

$$w_{Road} = \frac{w_L \cdot (N_{Left} + Npixel_H + N_{Right})}{Npixel_H}$$

where:

$w_L$ is the width of the field of view (F) at the lower line of view,
$Npixel_H$ is the horizontal resolution of the shooting means (C); and
$N_{Left}$, $N_{Right}$ are the number of virtual pixels at the lower line of view of the shooting means (C), which are needed to entirely frame the roadway (R) when said means do not subtend it completely with the result that the lines delimiting the roadway (RL1, RL2) exhibit an offset with respect to the bottom row of the image view pixel matrix, which can be calculated from the following relationships:

$$\begin{cases} y = a_1 x + b_1 \\ y = 0 \end{cases} \Rightarrow x = -\frac{b_1}{a_1} \Rightarrow N_{Left} = \left| -\frac{b_1}{a_1} \right|$$

$$\begin{cases} y = a_2 x + b_2 \\ y = 0 \end{cases} \Rightarrow x = -\frac{b_2}{a_2} \Rightarrow N_{Right} = \left| -\frac{b_2}{a_2} \right|$$

where:

$b_1$ and $b_2$ are the values of the offsets; and
$a_1$ and $a_2$ are the angular coefficients of inclination of the lines delimiting the roadway (RL1, RL2) on the image shooting plane.

4. A system according to Claim 3, in which the control means (U) are arranged to calculate a number of virtual traffic lanes and their widths from the following relationships:

$$Num_{Lanes} = \left| \frac{w_{Road}}{StandardWidth_{Lane}} \right|$$

$$\Downarrow$$

$$EstimatedWidth_{Lane} = \frac{w_{Road}}{Num_{Lanes}}$$

5. A system according to Claim 4, in which the control means (U) are arranged to calculate an even number of virtual traffic lanes so as to assign an equal number of lanes for each direction of travel in a two-way roadway (R).

6. A system according to Claim 4, in which the control means (U) are arranged to deactivate the system in the event that a single traffic lane is determined.

7. A system according to Claim 4, in which the control means (U) are arranged to calculate the positions of virtual lane-demarcation lines (L) with reference to the line (RL1; RL2) delimiting the roadway on the driving side by applying the following relationship:

$$y_{Line}(i) = i \cdot EstimatedWidth_{Lane}$$

where i is from 0 to $Num_{Lanes}$.

8. A system according to Claim 7, in which the control means (U) are arranged to calculate the current position of the vehicle on the roadway (R) with reference to the virtual lane-demarcation lines (L) according to the following relationships:

$$w_L : Npixel_H = y_{Car0Right} : \left( \frac{Npixel_H}{2} + N_{Right} \right)$$

$$\Downarrow$$

$$y_{Car0} = y_{Car0Right} = \frac{w_L \cdot \left( \frac{Npixel_H}{2} + N_{Right} \right)}{Npixel_H}$$

when the vehicle is near the righthand side of roadway, and

$$w_L : Npixel_H = y_{Car0Left} : \left( \frac{Npixel_H}{2} + N_{Left} \right)$$

$$\Downarrow$$

$$y_{Car0Left} = \frac{w_L \cdot \left( \frac{Npixel_H}{2} + N_{Left} \right)}{Npixel_H}$$

when the vehicle is near the lefthand side of roadway.

**9.** A system according to Claim 8, in which the control means (U) are arranged to calculate the distance between the vehicle and the demarcation lines (L) of the virtual lane to which it belongs from the following relationships:

$$d_{Right\_Side}(CurrentLane) = \left( y_{Car0} - \frac{w_{Car}}{2} \right) - y_{Line}(CurrentLane)$$

$$d_{Left\_Side}(CurrentLane) = y_{Line}(CurrentLane + 1) - \left( y_{Car0} + \frac{w_{Car}}{2} \right)$$

**10.** A system according to Claim 9, in which the control means (U) are arranged to calculate the time that the vehicle would take to reach and cross the virtual lane-demarcation line (L) towards which it is approaching, i.e. to leave the identified virtual lane, as a function of the speed of lateral drift of the vehicle $v_y$ and of its lateral acceleration $a_y$, according to the following relationships:

$$ttc_{Right\_Side} = \frac{-v_y \pm \sqrt{v_y^2 - 2 \cdot a_y \cdot d_{Right\_Side}(CurrentLane)}}{a_y}$$

$$ttc_{Left\_Side} = \frac{-v_y \pm \sqrt{v_y^2 - 2 \cdot a_y \cdot d_{Left\_Side}(CurrentLane)}}{a_y}$$

where d is the distance between the vehicle (V) and the demarcation line (L) of the virtual lane on the side corresponding to the drift.

11. A system according to Claim 10, in which the control means (U) are arranged to execute one or more predetermined strategies for flagging the driver as a function of exceeding the threshold of minimum safety distance from the demarcation line (L) of the virtual lane to which the vehicle belongs and/or the threshold of minimum time to cross the demarcation line (L) of the virtual lane to which the vehicle (V) belongs.

12. A system according to any one of the preceding claims, in which the shooting means (C) include a single shooting device, operating at visible wavelengths, or a pair of shooting devices adapted to provide stereoscopic view of the scene.

13. A system according to Claim 12, in which the shooting means (C) exhibit a horizontal angle of view substantially equal to 40°, a vertical angle of view substantially equal to 30° and an angle of orientation in the plane with respect to the plane of travel substantially between 80° and 90°.

14. A system according to Claim 13, in which the shooting means (C) are arranged for an automatic control of the aperture of the field of view (F).

15. A system according to Claim 13, in which the shooting means (C) can be oriented in space so as to track a turning manoeuvre of the vehicle (V) in order to shoot a locally bending roadway (R).

**Patentansprüche**

1. Fahrerassistenzsystem für ein Fahrzeug (V), das sich entlang einer Fahrbahn (R) ohne Fahrspurbegrenzungsmarkierungen bewegt, zur Unterstützung des Beibehaltens oder der Änderung einer Fahrtrichtung, mit:

   - Mitteln (C) zum Aufnehmen einer die Umgebung außerhalb des Fahrzeugs in seiner Fahrtrichtung darstellenden Szene, die eingerichtet sind, Bildsignale zu liefern, die einen Fußabdruck oder ein Blickfeld (F) darstellen, welches die Fahrbahn (R) und benachbarte Gebiete umfasst;
   - elektronischen Bildanalysemitteln (U), die mit den Aufnahmemitteln (C) verbunden und eingerichtet sind, in dem aufgenommenen Bild eine die Fahrbahn (R) darstellende Fläche in Bezug zu den benachbarten Flächen zu erkennen; und
   - elektronischen Steuermitteln (U), die eingerichtet sind, gegenwärtige Fahrtbedingungen des Fahrzeugs (V) zu bestimmen und auf Grundlage der bestimmten Fahrtbedingungen eine vorgegebene Fahrerassistenzprozedur auszuführen,

   **dadurch gekennzeichnet, dass** die Steuermittel eingerichtet sind,

   - die Breite der Fahrbahn ( R) abzuschätzen;
   - eine Anzahl von virtuellen Fahrspuren ohne Fahrspurbegrenzungslinien und ihre Positionen auf der Fahrbahn (R) als eine Funktion der geschätzten Breite der Fahrbahn (R) und vorgegebener Straßenkonfigurationseinschränkungen, darunter einer Mindestspurbreite, zu bestimmen;
   - die Position des Fahrzeugs (V) mit Bezug auf die virtuellen Fahrspuren zu bestimmen;
   - basierend auf dieser Position des Fahrzeugs dem Fahrer Zeichen zu geben, um einen anormalen Fahrzustand oder ein fehlerhaftes Fahrmanöver anzuzeigen.

2. System nach Anspruch 1, bei dem die Steuermittel (U) eingerichtet sind, um ein Paar von sich gegenüberliegenden Linien (RL1, RL2), die die Fahrbahn (R) gegenüber einem benachbarten Bankett oder äußerem Terrain begrenzen, basierend auf Farb- und/oder Texturmerkmalen zu identifizieren.

13

3. System nach Anspruch 2, bei dem die Steuermittel (U) eingerichtet sind, eine tatsächliche Breite $w_{Road}$ der Fahrbahn (R) unter Verwendung der Proportionalitätsbeziehung:

$$w_{Road} = \frac{w_L \cdot (N_{Left} + Npixel_H + N_{Right})}{Npixel_H}$$

zu berechnen, wobei:

$w_L$ die Breite des Sichtfeldes (F) an der unteren Sichtlinie ist,
$Npixel_H$ die horizontale Auflösung des Aufnahmemittels (C) ist;
$N_{Left}$, $N_{Right}$ die Anzahl von virtuellen Pixeln an der unteren Sichtlinie des Aufnahmemittels (C) sind, die benötigt werden, um die Fahrbahn ( R) vollständig einzufassen, wenn besagte Mittel ihr nicht vollständig gegenüber liegen, mit dem Ergebnis, dass die die Fahrbahn begrenzenden Linien (RL1, RL2) einen Versatz in Bezug auf die unterste Zeile der Bildansicht-Pixelmatrix aufweisen, der aus folgenden Beziehungen berechenbar ist:

$$\begin{cases} y = a_1 x + b_1 \\ y = 0 \end{cases} \Rightarrow x = -\frac{b_1}{a_1} \Rightarrow N_{Left} = \left| -\frac{b_1}{a_1} \right|$$

$$\begin{cases} y = a_2 x + b_2 \\ y = 0 \end{cases} \Rightarrow x = -\frac{b_2}{a_2} \Rightarrow N_{Right} = \left| -\frac{b_2}{a_2} \right|$$

wobei:

$b_1$ und $b_2$ die Werte der Versätze sind; und
$a_1$ und $a_2$ die Winkelkoeffizienten der Neigung der die Fahrbahn begrenzenden Linien (RL1, RL2) auf der Bildaufnahmeebene sind.

4. System nach Anspruch 3, bei dem die Steuermittel (U) eingerichtet sind, eine Anzahl von virtuellen Fahrspuren und ihre Breiten aus den folgenden Beziehungen zu berechnen:

$$Num_{Lanes} = \left| \frac{w_{Road}}{StandardWidth_{Lane}} \right|$$

$$\Downarrow$$

$$EstimatedWidth_{Lane} = \frac{w_{Road}}{Num_{Lanes}}$$

5. System nach Anspruch 4, bei dem die Steuermittel (U) eingerichtet sind, eine gerade Zahl von virtuellen Fahrspuren zu berechnen, um auf einer Fahrbahn (R) mit Gegenverkehr eine gleiche Zahl von Fahrspuren für jede Fahrtrichtung zuzuweisen.

6. System nach Anspruch 4, bei dem die Steuermittel (U) eingerichtet sind, das System zu deaktivieren, falls eine einzige Fahrspur festgestellt wird.

7. System nach Anspruch 4, bei dem die Steuermittel (U) eingerichtet sind, die Position von virtuellen Fahrbahnbegrenzungslinien (L) mit Bezug auf die die Fahrbahn auf der Fahrtseite begrenzende Linie (RL1, RL2) durch Anwendung der folgenden Beziehung zu berechnen:

$$y_{Line}(i) = i \cdot EstimatedWidth_{Lane}$$

wobei i von 0 bis $Num_{Lanes}$ ist

8. System nach Anspruch 7, bei dem die Steuermittel (U) eingerichtet sind, die Position des Fahrzeugs auf der Fahrbahn ( R) mit Bezug auf die virtuellen Fahrbahnbegrenzungslinien (L) nach den folgenden Beziehungen zu berechnen:

$$w_L : Npixel_H = y_{Car0Right} : \left( \frac{Npixel_H}{2} + N_{Right} \right)$$

$$\Downarrow$$

$$y_{Car0} = y_{Car0Right} = \frac{w_L \cdot \left( \frac{Npixel_H}{2} + N_{Right} \right)}{Npixel_H}$$

wenn das Fahrzeug nahe der rechten Seite der Fahrbahn ist, und

$$w_L : Npixel_H = y_{Car0Left} : \left( \frac{Npixel_H}{2} + N_{Left} \right)$$

$$\Downarrow$$

$$y_{Car0Left} = \frac{w_L \cdot \left( \frac{Npixel_H}{2} + N_{Left} \right)}{Npixel_H}$$

wenn das Fahrzeug nahe der linken Seite der Fahrbahn ist.

9. System nach Anspruch 8, bei dem die Steuermittel (U) eingerichtet sind, den Abstand zwischen dem Fahrzeug und den Begrenzungslinien (L) der virtuellen Fahrspur, zu der es gehört, nach den folgenden Beziehungen zu berechnen:

$$d_{Right\_Side}(CurrentLane) = \left( y_{Car0} - \frac{w_{Car}}{2} \right) - y_{Line}(CurrentLane)$$

$$d_{Left\_Side}(CurrentLane) = y_{Line}(CurrentLane + 1) - \left( y_{Car0} + \frac{w_{Car}}{2} \right)$$

10. System nach Anspruch 9, bei dem die Steuermittel (U) eingerichtet sind, die Zeit, die das Fahrzeug benötigen würde, um die virtuelle Begrenzungslinie (L), der es sich nähert, zu erreichen und zu kreuzen, d.h. die identifizierte virtuelle Fahrspur zu verlassen, als eine Funktion der Seitwärtsdriftgeschwindigkeit $v_y$ des Fahrzeugs und seiner Seitwärtsbeschleunigung $a_y$ nach folgenden Beziehungen zu berechen:

$$ttc_{Right\_Side} = \frac{-v_y \pm \sqrt{v_y^2 - 2 \cdot a_y \cdot d_{Right\_Side}(CurrentLane)}}{a_y}$$

$$ttc_{Left\_Side} = \frac{-v_y \pm \sqrt{v_y^2 - 2 \cdot a_y \cdot d_{Left\_Side}(CurrentLane)}}{a_y}$$

wobei d der Abstand zwischen dem Fahrzeug (V) und der Begrenzungslinie (L) der virtuellen Fahrspur auf der der Drift entsprechenden Seite ist.

11. System nach Anspruch 10, bei dem die Steuermittel (U) eingerichtet sind, als Funktion der Überschreitung der Schwelle des Mindestsicherheitsabstands von der Begrenzungslinie (L) der virtuellen Fahrspur, zu der das Fahrzeug gehört und/oder der Schwelle der minimalen Zeit bis zur Überquerung der Begrenzungslinie (L) der virtuellen Fahrspur, zu der das Fahrzeug (V) gehört, eine oder mehrere vorgegebene Strategien zum Zeichengeben an den Fahrer auszuführen.

12. System nach einem der vorhergehenden Ansprüche, bei dem die Aufnahmemittel (C) eine einzige bei sichtbaren Wellenlängen arbeitende Aufnahmevorrichtung oder ein Paar von Aufnahmevorrichtungen verwendet, die eingerichtet sind, ein stereoskopisches Bild der Szene zu liefern.

13. System nach Anspruch 12, bei dem die Aufnahmemittel (C) einen horizontalen Blickwinkel von im Wesentlichen gleich 40°, einen vertikalen Blickwinkel von im Wesentlichen gleich 30° und einen Orientierungswinkel in der Ebene in Bezug auf die Fahrtebene von im Wesentlichen zwischen 80° und 90° aufweisen.

14. System nach Anspruch 13, bei dem die Aufnahmemittel (C) eingerichtet sind für eine automatische Steuerung des Ausschnitts des Blickfeldes (U).

15. System nach Anspruch 13, bei dem die Aufnahmemittel (C) im Raum orientierbar sind, um ein Kurvenfahrmanöver des Fahrzeugs (V) zu verfolgen und so eine lokal gekrümmte Fahrbahn (R) aufzunehmen.

**Revendications**

1. Système d'assistance à la conduite pour un véhicule (V) qui circule sur une chaussée (R) qui ne comporte pas de marquage au sol pour la démarcation des voies de circulation, afin d'aider à maintenir ou à modifier la direction de déplacement, comprenant

   - des moyens (C) pour photographier une scène représentant l'environnement à l'extérieur du véhicule dans sa direction de déplacement, adaptés pour fournir des signaux d'image représentant une empreinte ou un champ visuel (F) comprenant la chaussée (R) et des zones environnantes;
   - des moyens d'analyse d'images électroniques (U) reliés aux moyens de photographie (C) et agencés pour reconnaître, dans l'image prise, une aire représentant la chaussée (R) par rapport aux surfaces voisines; et
   - des moyens de réglage électroniques (U) adaptés pour la détermination des conditions effectives de déplacement du véhicule (V) et pour exécuter, sur la base des conditions de circulation déterminées, un mode opératoire d'assistance à la conduite préenregistré,

   **caractérisé en ce que** les moyens de régulation sont agencés pour:

   - estimer la largeur de la chaussée (R);
   - déterminer un certain nombre de voies de trafic virtuelles ne comportant pas de lignes de démarcation des voies et leurs positions dans la chaussée (R) sous la forme d'une fonction de la largeur estimée de la chaussée (R) et de contraintes prédéterminées de configuration de la route, y compris une largeur de voie minimale;
   - déterminer la position du véhicule (V) par rapport aux voies de trafic virtuelles; et
   - avertir le conducteur pour lui indiquer une condition de conduite anormale ou une manoeuvre de conduite erronée sur la base de cette position du véhicule.

2. Système selon la revendication 1, dans lequel les moyens de réglage (U) sont agencés pour identifier une paire de lignes opposées en vis-à-vis (RL1, RL2), délimitant la chaussée (R) par rapport à un accotement voisin ou à un terrain externe, sur la base de caractéristiques chromatiques et/ ou de texture respectives.

3. Système selon la revendication 2, dans lequel les moyens de réglage (U) sont agencés pour calculer une largeur effective $w_{Road}$ de la chaussée (R) avec utilisation de la relation de proportionnalité:

$$w_{Road} = \frac{w_L \cdot (N_{Left} + Npixel_H + N_{Right})}{Npixel_H}$$

où:

$w_L$ est la largeur du champ visuel (F) à la ligne de vue inférieure,
$Npixel_H$ est la résolution horizontale des moyens de photographie (C); et
$N_{Left}$, $N_{Right}$ sont le nombre de pixels virtuels à la ligne de vue inférieure des moyens de photographie (C), qui sont nécessaires pour cadrer entièrement la chaussée (R) lorsque lesdits moyens ne la soutendent pas complètement avec pour résultat que les lignes délimitant la chaussée (RL1, RL2) présentent un décalage par rapport à la ligne inférieure de la matrice de pixels de la vue formant image, qui peut être calculé à partir des relations suivantes:

$$\begin{cases} y = a_1 x + b_1 \\ y = 0 \end{cases} \Rightarrow x = -\frac{b_1}{a_1} \Rightarrow N_{Left} = \left| -\frac{b_1}{a_1} \right|$$

$$\begin{cases} y = a_2 x + b_2 \\ y = 0 \end{cases} \Rightarrow x = -\frac{b_2}{a_2} \Rightarrow N_{Right} = \left| -\frac{b_2}{a_2} \right|$$

où:

$b_1$ et $b_2$ sont les valeurs des décalages; et
$a_1$ et $a_2$ sont les coefficients angulaires d'inclinaison des lignes délimitant la chaussée (RL1, RL2) sur le plan de photographie d'image.

4. Système selon la revendication 3, dans lequel les moyens de réglage (U) sont agencés pour calculer un nombre de voies de trafic virtuelles et leurs largeurs à partir des relations suivantes:

$$Num_{Lanes} = \left| \frac{w_{Road}}{StandardWidth_{Lane}} \right|$$

$$\Downarrow$$

$$EstimatedWidth_{Lane} = \frac{w_{Road}}{Num_{Lanes}}$$

5. Système selon la revendication 4, dans lequel les moyens de réglage (U) sont agencés pour calculer un nombre paire de voies de trafic virtuelles de manière à assigner un nombre égal de voie pour chaque direction de circulation dans une chaussée à deux voies (R).

**6.** Système selon la revendication 4, dans lequel les moyens de réglage (U) sont agencés pour désactiver le système dans le cas où une voie de trafic unique est déterminée.

**7.** Système selon la revendication 4, dans lequel les moyens de réglage (U) sont agencés pour calculer les positions de lignes de démarcation de voies virtuelles (L) par référence à la ligne (RL1; RL2) délimitant la chaussée du côte de circulation par application de la relation suivante:

$$y_{Line}(i) = i \cdot EstimatedWidth_{Lane}$$

où i va de 0 à $Num_{Lanes}$.

**8.** Système selon la revendication 7, dans lequel les moyens de réglage (U) sont agencés pour calculer la position effective du véhicule sur la chaussée (R) en référence aux lignes de démarcation de voies virtuelles (L) conformément aux relations suivantes:

$$w_L : Npixel_H = y_{Car0Right} : \left( \frac{Npixel_H}{2} + N_{Right} \right)$$

$$\Downarrow$$

$$y_{Car0} = y_{Car0Right} = \frac{w_L \cdot \left( \frac{Npixel_H}{2} + N_{Right} \right)}{Npixel_H}$$

lorsque le véhicule est proche du côté droit de la chaussée, et

$$w_L : Npixel_H = y_{Car0Left} : \left( \frac{Npixel_H}{2} + N_{Left} \right)$$

$$\Downarrow$$

$$y_{Car0Left} = \frac{w_L \cdot \left( \frac{Npixel_H}{2} + N_{Left} \right)}{Npixel_H}$$

lorsque le véhicule est proche du côté gauche de la chaussée.

**9.** Système selon la revendication 8, dans lequel les moyens de réglage (U) sont agencés pour calculer la distance entre le véhicule et les lignes de démarcation (L) de la voie virtuelle à laquelle il appartient à partir des relations suivantes:

$$d_{Right\_Side}(CurrentLane) = \left( y_{Car0} - \frac{w_{Car}}{2} \right) - y_{Line}(CurrentLane)$$

$$d_{Left\_Side}(CurrentLane) = y_{Line}(CurrentLane + 1) - \left( y_{Car0} + \frac{w_{Car}}{2} \right)$$

**10.** Système selon la revendication 9, dans lequel les moyens de réglage (U) sont agencés pour calculer le temps que le véhicule prendrait pour atteindre et dépasser la ligne de démarcation de voie virtuelle (L) dont il se rapproche, c'est-à-dire pour quitter la voie virtuelle identifiée, en fonction de la vitesse de déviation latérale du véhicule $v_y$ et de son accélération latérale $a_y$, conformément aux relations suivantes:

$$ttc_{Right\_Side} = \frac{-v_y \pm \sqrt{v_y^2 - 2 \cdot a_y \cdot d_{Right\_Side}(CurrentLane)}}{a_y}$$

$$ttc_{Left\_Side} = \frac{-v_y \pm \sqrt{v_y^2 - 2 \cdot a_y \cdot d_{Left\_Side}(CurrentLane)}}{a_y}$$

où d est la distance entre le véhicule (V) et la ligne de démarcation (L) de la voie virtuelle sur le côté correspondant à la déviation.

**11.** Système selon la revendication 10, dans lequel les moyens de réglage (U) sont agencés pour exécuter une ou plusieurs stratégies prédéterminées pour avertir le conducteur en fonction du dépassement du seuil de distance de sécurité minimale à partir de la ligne de démarcation (L) de la voie virtuelle à laquelle le véhicule appartient et/ou le seuil de temps minimal pour traverser la ligne de démarcation (L) de la voie virtuelle à laquelle le véhicule (V) appartient.

**12.** Système selon l'une quelconque des revendications précédentes, dans lequel les moyens de photographie (C) comportent un seul dispositif de photographie, opérant à des longueurs d'ondes visibles, ou une paire de dispositifs de photographie adaptés pour procurer une vue stéréoscopique de la scène.

**13.** Système selon la revendication 12, dans lequel les moyens de photographie (C) présentent un angle de vue horizontale substantiellement égal à 40°, un angle de vue vertical substantiellement égal à 30° et un angle d'orientation dans le plan par rapport au plan de déplacement substantiellement entre 80 et 90°.

**14.** Système selon la revendication 13, dans lequel les moyens de photographie (C) sont agencés pour un réglage automatique de l'ouverture du champ visuel (F).

**15.** Système selon la revendication 13, dans lequel les moyens de photographie (C) peuvent être orientés dans l'espace de manière à suivre une manoeuvre tournante du véhicule (V) afin de photographier une chaussée (R) localement incurvée.

FIG.1

FIG.2a

FIG.2b

FIG.2c

EP 2 075 170 B1

RL2

$Npixel_H$

$Npixel_V$

RL1

FIG.3a

FIG.3b

FIG.4a

FIG.4b

EP 2 075 170 B1

FIG.5a

FIG.5b

RL2

$d_{Right\_Side}(CurrentLane)$

yLine (Current Lane)

C

L

V

yLine (Current Lane+1)

$d_{Left\_Side}(CurrentLane)$

L

RL1

FIG.5c

EP 2 075 170 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1760662 A1